# EUROPEAN PATENT SPECIFICATION

(11) **EP 1 939 036 B1**
(45) Date of publication and mention of the grant of the patent: **07.12.2011**
(21) Application number: 06821875.9
(22) Date of filing: 16.10.2006
(51) Int. Cl.: B60P 3/20, B60H 1/32, B65D 88/12, F25D 11/00, F25D 23/06

(54) **REFRIGERATION DEVICE FOR TRAILER**
KÜHLVORRICHTUNG FÜR EINEN ANHÄNGER
DISPOSITIF DE RÉFRIGÉRATION POUR REMORQUE

(30) Priority: 21.10.2005 JP 2005307655
(43) Date of publication of application: 02.07.2008
(73) Proprietor: DAIKIN INDUSTRIES, LTD., Osaka-shi, Osaka 530-8323 (JP)
(72) Inventor: KITANO, Shigeichi, Sakai-shi, Osaka, 591-8511 (JP); YAKUSHIJI, Fumiaki, Sakai-shi, Osaka, 591-8511 (JP); NISHIHAMA, Yukio, Osaka-shi, Osaka, 530-8323 (JP); KUDOU, Keisuke, Osaka-shi, Osaka, 530-8323 (JP); MIZUTANI, Yasutoshi, Osaka-shi, Osaka, 530-8323 (JP)
(74) Representative: HOFFMANN EITLE
(86) International application number: PCT/JP2006/320561
(87) International publication number: WO 2007/046329

(56) References cited:
- EP-A- 1 308 330
- EP-A- 1 512 565
- WO-A-2004/108463
- JP-A- 4 090 472
- JP-A- 04 090 472
- JP-A- 2001 213 222
- JP-A- 2004 286 363
- JP-U- 02 100 848
- US-A- 5 711 073

## Description

### TECHNICAL FIELD

In general, the present invention relates to a refrigeration system intended for use in a transport trailer. More specifically, the present invention relates to a technology for enhancing the maintainability of the trailer refrigeration system.

### BACKGROUND ART

In the past, refrigeration systems, which are installed in refrigeration vehicles for ground transportation of frozen foods et cetera and used to provide cooling of the inside of their freezing storage compartments, have been known in the art (see, for example, Japanese Patent Document JP-A-H05(1993)-38933). Such a refrigeration system includes a sub engine separate from the drive engine of the refrigeration vehicle and an electric compressor driven by the sub engine, and is installed in the cargo-carrying platform. A trailer refrigeration system having the features of the preamble of claim 1 is known from US-A-5,711,073. Further it is known from EP-A-1 512 565 to provide the converter and inverter in different sections apart from each other to reduce heat loss and noise leakage in the alternating current line.

### DISCLOSURE OF THE INVENTION

### PROBLEMS THAT THE INVENTION SEEKS TO OVERCOME

However, in the refrigeration system of the patent document, the sub engine and the compressor motor are in direct connection with each other. This especially produces the problem of poor maintainability of the sub engine. The frequency of maintenance of the sub engine is higher than the other refrigeration equipment. Besides, the work of maintenance of the sub engine is cumbersome and complicated because of the requirement that either the sub engine must be detached from the motor or the entire refrigeration system must be removed from the vehicle.

In view of these problems associated with the prior art, the present invention was made. Accordingly, an object of the present invention is to enhance maintainability in a refrigeration system which is provided with a compressor-driving engine separate from the drive engine of the vehicle.

### MEANS FOR OVERCOMING THE PROBLEMS

The present invention provides a trailer refrigeration system for providing cooling of the storage compartment of a trailer, the trailer refrigeration system comprising the features of claim 1.

In the present invention, the electricity generator **(22)** and the electricity-generator engine **(21)** are contained in one unit while on the other hand the electric compressor **(31)** is contained in another unit. These units **(U1, U2)** are connected together by electric wiring or other suitable means. Accordingly, in performing maintenance on the electricity generator **(22)** and the electricity-generator engine **(21)** both of which require relatively frequent maintenance, it is possible to remove only the first unit **(U1)** from the vehicle by just detaching the electric wiring.

In addition, since the units **(U1, U2)** are connected together by the electric wiring, this enhances the flexibility of the location of installation of each unit **(U1, U2).**

Since the electricity generator **(22)** and the converter **(23)** are electrically connected together, the units **(U1, U2)** are electrically connecting together. And, the converter **(23)** and the inverter **(24, 25, 26)** which are electric power conversion devices are arranged between the electricity generator **(22)** and the electric compressor **(31)** and as a result the electric compressor **(31)** is not driven in conjunction with the rotation of the electricity-generator engine **(21)**. In other words, the speed of rotation of the electric compressor **(31)** is adjusted by controlling the inverter **(24**, **25**, **26)**, regardless of the speed of rotation of the electricity-generator engine **(21).**

In addition, the first unit **(U1)** may be mounted in the lower part of the trailer.

If the electricity generator **(22)** and the electricity-generator engine **(21)**, both of which produce a relatively louder noise than the refrigeration equipment such as the electric compressor **(31)** et cetera, are mounted in the lower part of the trailer (for example, on the bottom surface). Noise caused by the refrigeration system **(10)** is controlled.

The second unit **(U2)** may be mounted in the roof part of the trailer.

If the refrigerant circuit provided with the electric compressor **(31)** is arranged in place in the middle of the roof part of the trailer, in a corner of the roof part of the trailer, or other suitable position. Air cooled by the evaporator is uniformly supplied throughout the refrigeration storage compartment.

The first unit **(U1)** may contain a console panel **(29)** for the refrigeration system.

If the console panel **(29)** is arranged in place in the lower part of the trailer and has an operation part for storage-compartment temperature setting, operation mode setting et cetera and a display part for storage-compartment preset temperature display et cetera, the operator (driver) can easily operate the console panel **(29)**.

### ADVANTAGEOUS EFFECTS OF THE INVENTION

Therefore, in accordance with the present invention, the electricity generator **(22)** and the electricity-generator engine **(21)** are contained in one unit while on the other hand the electric compressor **(31)** is contained in another unit, and the units **(U1, U2)** are electrically connected together and as a result it is possible to easily remove only the unit (U1) containing the electricity generator **(22)** and the electricity-generator engine **(21)** from the vehicle. This enhances the maintainability of the electricity-generator engine **(21)** et cetera.

In addition, since the units **(U1, U2)** are electrically connected together, each unit is freed from the constraint imposed by the other unit. That is, it is possible to enhance the flexibility of the location of installation of each unit **(U1, U2).** Accordingly, if the units (**U1, U2**) are arranged such that they are spaced apart as much as possible, the refrigerant circuit in which the electric compressor **(31)** is disposed is not subjected to the influence of heat generated by the electricity-generator engine **(21)** et cetera. This therefore accomplishes the energy saving of the refrigeration operation.

In addition, in accordance with the present invention, the converter **(23)** and the inverter **(24**, **25**, **26)** are connected to between the electricity generator **(22)** and the electric compressor (31), thereby making it possible to individually control the speed of rotation of the electricity-generator engine **(21)** and the speed of rotation of the electric compressor **(31)**. Accordingly, there is no need that, being constrained by the allowable speed of rotation of the electric compressor **(31)**, the electricity-generator engine **(21)** be driven at, for example, low speed/high torque conditions. This therefore eliminates the need that the displacement of the electricity-generator engine **(21)** be increased more than is necessary. As a result, it becomes possible to reduce the electricity-generator engine **(21)** in size and weight.

In addition, in accordance with an embodiment of the present invention, the electricity generator **(22)** and the electricity-generator engine **(21)** are arranged in the lower part of the trailer, thereby making it possible to control noise from the electricity generator **(22)** and the electricity-generator engine **(21)**. In addition, the electricity generator **(22)** and the electricity-generator engine **(21)** vibrate relatively strongly. However, such vibration is controlled not to affect the electric compressor **(31)** et cetera.

Additionally, in accordance with an embodiment of the present invention, the refrigerant circuit in which the electric compressor **(31)** is disposed is arranged either on the roof part of the trailer or in a corner of the roof part of the trailer, thereby making it possible to uniformly supply air cooled in the evaporator throughout the refrigeration storage compartment. Accordingly, the efficiency of refrigeration is enhanced.

In addition, in accordance with an embodiment of the present invention, it is designed such that the console panel **(29)** is positioned in the lower part of the trailer, thereby making it possible to enhance the operability of the refrigeration system **(10)**.

### BRIEF DESCRIPTION OF THE DRAWINGS

In the drawings:
Figure **1** is a left-hand side view of a refrigeration vehicle into which a refrigeration system according to an embodiment of the present invention is incorporated;
Figure **2** is a schematic system diagram illustrating the entire refrigeration system of the embodiment;
Figure **3** is a plumbing diagram illustrating a refrigerant circuit of the refrigeration system;
Figure **4** is a view illustrating the entire right-hand side of a trailer according to the embodiment; and
Figure **5** is a view illustrating the entire right-hand side of a trailer according to a variation of the embodiment.

### INDEX OF REFERENCE SIGNS IN THE DRAWINGS

10: refrigeration system
21: electricity-generator engine
22: electricity generator
23: converter
24-26: first to third inverters
29: console panel
30: refrigerant circuit
31: electric compressor
U1: engine unit (first unit)
U2: refrigeration equipment unit (second unit)

### BEST MODE FOR CARRYING OUT THE INVENTION

Referring to the drawings, an embodiment of the present invention is described in detail below.

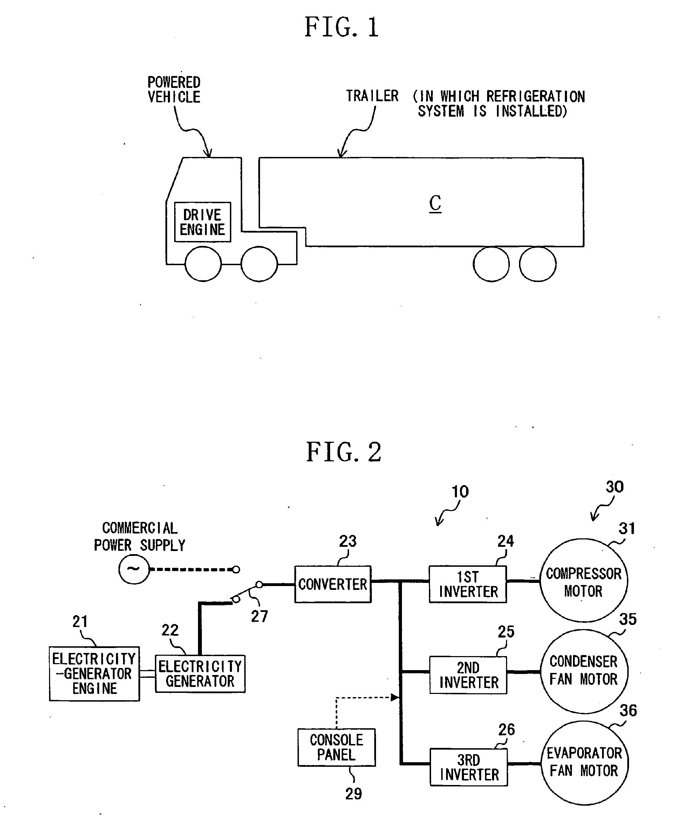

Referring to Figure 1, there is shown a large refrigeration vehicle used for ground transportation of frozen foods, fresh foods et cetera, and a refrigeration system **(10)** of the present embodiment is incorporated into the refrigeration vehicle. The refrigeration vehicle includes a powered vehicle (trailer head) having a driver's cabin and a drive engine, and a cargo-carrying platform vehicle (trailer) having a refrigeration storage compartment **(C)**. The trailer head and the trailer are detachably connected together. The refrigeration system **(10)** of the present embodiment is installed in the cargo-carrying platform vehicle (trailer) and provides cooling of the inside of the refrigeration storage compartment **(C)**.

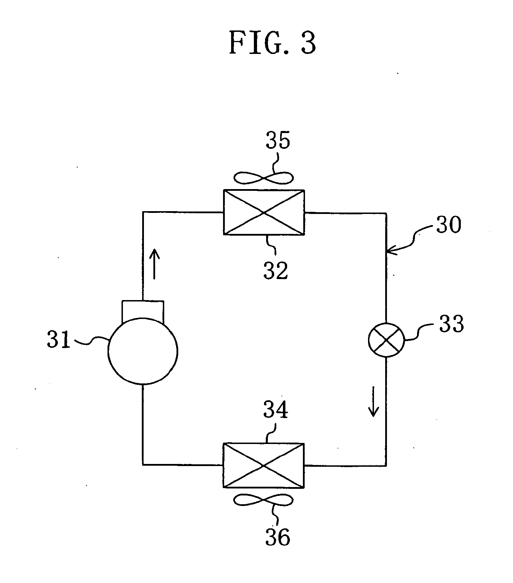

As shown in Figures **2** and **3**, the refrigeration system **(10)** includes an electricity-generator engine **(21),** an electricity generator **(22)**, a converter **(23)**, three inverters **(24**, **25**, **26)**, a refrigerant circuit **(30)**, and a console panel **(29)**.

The electricity generator **(22)** is mechanically connected, for example, through a pulley or a belt, to the electricity-generator engine **(21)**. The electricity generator **(22)** generates electricity by the use of power from the electricity-generator engine **(21)**. The electricity-generator engine **(21)** is provided separately from the drive engine of the powered vehicle and is for dedicated use by the refrigeration system **(10)**. And, the operation speed of rotation of the electricity-generator engine **(21)** is controlled by regulating the amount of fuel supply by electronic governor control.

The converter **(23)** is connected by electric wiring to the electricity generator **(22).** The converter **(23)** converts ac electric power generated by the electricity generator **(22)** into dc electric power. Each of the three inverters **(24, 25, 26)** is connected in parallel to the converter **(23)** by electric wiring, and converts dc electric power from the converter **(23)** into ac electric power.

More specifically, the first inverter **(24)** is connected by electric wiring to the motor of the electric compressor **(31)** in the refrigerant circuit **(30).** The first inverter **(24)** is configured such that it outputs ac electric power to drive the electric compressor **(31)**. The second inverter **(25)** is connected by electric wiring to the motor of a condenser fan **(35)** (described later) in the refrigerant circuit **(30).** The second inverter **(25)** is configured such that it outputs ac electric power to drive the condenser fan **(35)**. The third inverter (26) is connected by electric wiring to the motor of an evaporator fan **(36)** (described later) in the refrigerant circuit **(30)**. The third inverter **(26)** is configured such that it outputs ac electric power to drive the evaporator fan **(36)**.

To sum up, in the present embodiment, the converter **(23)** and the inverters **(24**, **25**, **26)** together constitute an electric-power converting system.

The refrigerant circuit **(30)** includes in addition to the electric compressor **(31)** a condenser **(32)**, an electronic expansion valve **(33)**, and an evaporator **(34)** all of which are connected in series by piping. The condenser fan **(35)** is arranged in the vicinity of the condenser (32) and the evaporator fan **(36)** in the vicinity of the evaporator **(34).**

The electric compressor **(31)** is provided with a compression mechanism of the reciprocating type and is of a so-called reciprocating type. Air outside the storage compartment is taken into the condenser **(32)** by the condenser fan **(35)** while air inside the storage compartment is taken into the evaporator **(34)** by the evaporator fan **(36)**. The refrigerant circuit **(30)** is configured such that refrigerant is circulated to operate a vapor compression refrigeration cycle. In other words, liquid refrigerant condensed in the condenser **(32)** is decompressed in the electronic expansion valve **(33)** and evaporates by heat exchange with air in the storage compartment whereby the air in the storage compartment is cooled.

Various sensors (not shown) such as temperature sensors, pressure sensors, pressure switches et cetera are connected in the piping of the refrigerant circuit **(30)**.

A selector switch **(27)** is disposed along electric wiring which connects the electricity generator **(22)** and the converter **(23).** The selector switch **(27)** is configured such that it provides switching between a first state in which the converter **(23)** is connected to the electricity generator **(22)** and a second state in which the converter (**23**) is connected to the commercial power supply. For example, in the case where the refrigeration vehicle remains parked for many hours, the electricity-generator engine **(21)** is stopped and the selector switch **(27)** is switched to the second state so that the converter (23) can be connected to the commercial power supply.

The console panel **(29)** has an operation part, a display part, a recording part et cetera (not shown). The operation part is for turning on/off various power sources and for setting the temperature of the storage compartment, the mode of operation et cetera. The display part is for displaying the preset temperature of the storage compartment, the current temperature of the storage compartment, the failure code, the preventive maintenance alarm sign, the mode of operation et cetera. The recording part is for recording the temperature data for the past several days, the operating data of each equipment (such as the speed of rotation of the electric compressor **(31),** the speed of rotation of the electricity-generator engine **(21)** et cetera), and other data.

In the refrigeration system **(10)**, the electricity-generator engine **(21)**, the electric compressor **(31),** the fan **(35**), and the fan **(36)** are individually controlled. That is, in order that the operation speed of rotation of the electric compressor **(31)** and the operation speed of rotation of each fan **(35**, **36)** may be regulated based on the required refrigeration capacity, the output electric power of each inverter **(24**, **25**, **26)** is individually controlled. In addition, the electricity-generator engine **(21)** is controlled such that it is driven at the operation speed of rotation that achieves optimal efficiency, regardless of the operation speed of rotation of the electric compressor **(31)** et cetera.

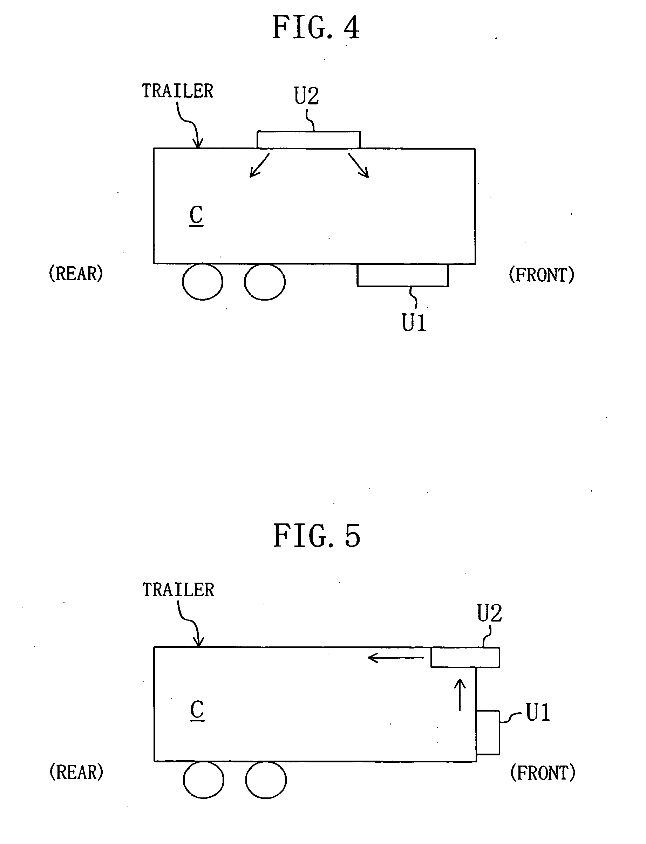

As shown in Figure 4, as a feature of the present invention, the refrigeration system **(10)** is divided into two units, namely an engine unit **(U1)** and a refrigeration equipment unit **(U2)** each of which is provided with respective equipment.

The engine unit **(U1)** has the electricity-generator engine **(21)**, the electricity generator **(22)**, and the console panel **(29)**. In addition, devices associated with the electricity-generator engine **(21)**, such as a radiator, a radiator fan, a carbureter, an alternator, a buttery, a governor, a muffler et cetera, are also arranged in the engine unit **(U1)**.

The converter **(23)**, the inverters **(24**, **25**, **26)**, and the refrigerant circuit **(30)** are provided in the refrigeration equipment unit **(U2).** In addition, a control board (not shown) is also provided in the refrigeration equipment unit **(U2)**.

The engine unit **(U1)** and the refrigeration equipment unit **(U2)** are connected together by electric wiring. The selector switch **(27)** is disposed along the electric wiring.

The engine unit **(U1)** is positioned slightly to the front in the bottom (lower) part of the trailer. That is, the electricity-generator engine **(21)** and the electricity-generator engine **(21)**, both of which emit a relatively loud noise, are situated in the bottom part of the trailer, thereby controlling noise emitted therefrom. In addition, the console panel **(29)** is arranged at the height level that allows the operator to operate it with ease. Also note that in Figure 4 the front indicates the side of the powered vehicle. This is the same as in Figure 5 (described later).

The refrigeration equipment unit **(U2)** is positioned in the middle of the roof part of the trailer, i.e., in the middle of the ceiling part of the refrigeration storage compartment **(C)**. This means that each of the units **(U1**, **U2)** is so positioned as to be spaced relatively apart from the other. Although the electricity-generator engine **(21)** and the electricity generator **(22)** heat up to high temperature, the resulting heat hardly reaches the refrigerant circuit **(30)**. This enhances the efficiency of refrigeration of the refrigerant circuit **(30)**. In addition, although the electricity-generator engine **(21)** and the electricity generator **(22)** vibrate relatively strongly, the refrigerant circuit **(30)** is freed from the resulting vibration.

In performing maintenance, for example, on the electricity-generator engine **(21)**, the engine unit **(U1)** can be easily removed from the vehicle by just detaching the electric wiring between the units **(U1**, **U2)**. Stated another way, unlike the prior art, neither the detaching of the electricity-generator engine **(21)** from the electricity generator **(22)** nor the removing of the entire system from the vehicle is required.

### RUNNING OPERATION

Next, the running operation of the refrigeration system **(10)** of the present embodiment is described below.

In the first place, when the electricity-generator engine **(21)** is activated, the electricity generator **(22)** generates electric power by the use of mechanical power from the electricity-generator engine **(21)**. AC electric power generated is converted by the converter **(23)** into dc electric power which is then output to each of the inverters **(24**, **25**, **26)**. In each inverter **(24**, **25**, **26)**, the input dc electric power is reconverted to ac electric power. The first inverter **(24)** outputs ac electric power to the electric compressor **(31)**, the second inverter **(25)** to the fan **(35)**, and the third inverter **(26)** to the fan **(36)**. Consequently, the electric compressor **(31)** and the fans **(35**, **36)** are driven and the refrigerant circuit **(30)** operates a vapor compression refrigeration cycle. Since the refrigeration equipment unit **(U2)** is positioned in the middle of the ceiling part of the refrigeration storage compartment **(C)**, air cooled in the evaporator **(34)** is uniformly supplied throughout the refrigeration storage compartment **(C)**.

In the above-described running state, each inverter **(24**, **25**, **26)** is controlled individually from the other inverters whereby the electric compressor **(31)** and each fan **(35**, **36)** are controlled in their speed of rotation. On the other hand, the speed of rotation of the electricity-generator engine **(21)** is controlled, independently of the operation speed of rotation of the electric compressor **(31)** and of the operation speed of rotation of each fan **(35**, **36).** Accordingly, since the rated speed of rotation of the electricity-generator engine **(21)** is not required to match the allowable speed of rotation of the electric compressor **(31)**, there is no need that the electricity-generator engine **(21)** should exert high torque in the region of low rotation speed. This prevents the electricity-generator engine **(21)** from growing in size.

### ADVANTAGEOUS EFFECTS OF THE EMBODIMENT

As described above, in accordance with the present embodiment, the electricity generator **(22)** and the electricity-generator engine **(21)** are contained in one unit while on the other hand the refrigerant circuit **(30)** is contained in another unit, and the units **(U1**, **U2)** are electrically connected together. Accordingly, for example, in performing maintenance on the electricity-generator engine **(21)**, the engine unit **(U1)** can be easily removed from the vehicle by just detaching the electrical wiring. That is to say, neither the detaching of the electricity-generator engine **(21)** from the electricity generator **(22)** mechanically connected thereto nor the removing of the entire system from the vehicle is required. This makes it possible to enhance the maintainability of the electricity-generator engine **(21)**. This point is the same as for the maintainability of the other equipment such as the electricity generator **(22)**, the electric compressor **(31)** et cetera.

In addition, the converter **(23)** and the inverters **(24**, **25**, **26)** are connected to between the electricity generator **(22)** and the electric compressor (31), thereby making it possible to individually control the speed of rotation of the electricity-generator engine **(21)** and the speed of rotation of the electric compressor **(31).** Accordingly, there is no need that, being constrained by the allowable speed of rotation of the electric compressor (31), the electricity-generator engine **(21)** be driven at, for example, low speed/high torque conditions. This therefore eliminates the need that the displacement of the electricity-generator engine **(21)** be increased more than is necessary. As a result, it becomes possible to reduce the electricity-generator engine **(21)** in size and weight.

In addition, the electricity generator **(22)** and the electricity-generator engine **(21)** are arranged in the bottom part of the trailer, thereby making it possible to control noise from the electricity generator **(22)** and the electricity-generator engine **(21).** In addition, the electricity generator **(22)** and the electricity-generator engine **(21)** vibrate relatively strongly. However, such vibration is controlled not to affect the refrigerant circuit **(30).**

In addition, the units **(U1**, **U2)** are connected together by electric wiring, thereby making it possible to arrange, as in the present embodiment, the units **(U1**, **U2)** such that they are spaced relatively apart from each other. In other words, the flexibility of the location of installation of each unit **(U1**, **U2)** is enhanced. Accordingly, by the spacing apart of the units **(U1**, **U2)**, the refrigerant circuit **(30)** is not subjected to the influence of heat generated by the electricity-generator engine **(21**). This therefore accomplishes the energy saving of the refrigeration operation.

In addition, since the refrigerant circuit **(30)** is arranged in the middle of the roof part of the trailer, i.e., in the middle of the upper surface wall of the trailer, this makes it possible to uniformly supply air cooled in the evaporator throughout the refrigeration storage compartment. Accordingly, the efficiency of refrigeration is enhanced, thereby accomplishing the energy saving of the refrigeration operation.

In addition, since the console panel **(29)** is arranged in the bottom part of the trailer, this makes it possible to enhance the operability of the refrigeration system **(10)**.

### VARIATIONS OF THE EMBODIMENT

Referring to Figure 5, there is illustrated a variation of the embodiment described above. In this variation, the engine unit **(U1)** and the refrigeration equipment unit **(U2)** are installed in different positions from those in the embodiment. More specifically, the engine unit **(U1)** is positioned in the lower part of the front wall of the trainer while on the other hand the refrigeration equipment unit **(U2)** is positioned on the forward side of the trailer roof part, i.e., in the corner of the trailer roof part. That is, a part of the refrigeration equipment unit **(U2)** is located within the refrigeration storage compartment **(C)** and the rest is located outside the refrigeration storage compartment **(C)**.

In addition, there is another variation (not shown) of the embodiment. In this variation, the refrigeration equipment unit **(U2)** is positioned in the upper part of the front wall of the trailer. That is, the entire refrigeration equipment unit **(U2)** is located outside the refrigeration storage compartment **(C)** of the trailer. It may be arranged in this case such that the front wall of the trailer is provided with an opening for the mounting of the refrigeration equipment unit **(U2)** and the opening is closed when the refrigeration equipment unit **(U2)** is mounted thereover. In other words, the refrigeration equipment unit **(U2)** serves also as a part of the front wall of the trailer.

It should be noted that the above-described embodiment and its variations are essentially preferable exemplifications that are not intended in any sense to limit the scope of the claims.

### INDUSTRIAL APPLICABILITY

As has been described above, the present invention is useful as a refrigeration system incorporated into a trailer (cargo-carrying vehicle).

## Claims

1. A trailer refrigeration system for providing cooling of the storage compartment of a trailer, the trailer refrigeration system comprising an electricity generator (22), an electricity-generator engine (21) provided separately from a drive engine of a powered vehicle and configured to drive the electricity generator (22), and a refrigeration-cycle electric compressor (31) which is driven by electric power generated from the electricity generator (22) as an electric power source,
wherein the trailer refrigeration system comprises a first unit (U1) containing the electricity generator (22) and the electricity-generator engine (21) and a second unit (U2) electrically connected to the first unit (U1) and containing the electric compressor (31), **characterized in that**
the second unit (U2) is provided with a converter (23) for converting electric power generated from the electricity generator (22) into DC electric power and an inverter (24) for converting DC electric power from the converter (23) into AC electric power,
wherein the electric compressor (31) is driven by the output of the inverter (24) and the trailer refrigeration system is configured to independently control the speed of rotation of the electricity-generator engine (21) and the speed of rotation of the electric compressor (31).

2. The trailer refrigeration system of claim 1, wherein the first unit (U1) is mounted in the lower part of the trailer.

3. The trailer refrigeration system of claim 1, wherein the second unit (U2) is mounted in the roof part of the trailer.

4. The trailer refrigeration system of claim 2, wherein the first unit (U1) contains a console panel (29) for the refrigeration system.

## Patentansprüche

1. Anhängerkühlsystem zur Bereitstellung der Kühlung des Lagerabteils eines Anhängers, wobei das Anhängerkühlsystem einen Stromgenerator (22), einen Stromgeneratormotor (21), der separat von einem Antriebsmotor eines angetriebenen Fahrzeugs vorgesehen ist und zum Antrieb des Stromgenerators (22) ausgestaltet ist, und einen elektrischen Kompressor (31) für einen Kühlkreislauf, der durch den elektrischen Strom angetrieben wird, der von dem Stromgenerator (22) als Stromquelle erzeugt wird, aufweist,
wobei das Anhängerkühlsystem eine erste Einheit (U1), die den Stromgenerator (22) und den Stromgeneratormotor (21) enthält, und eine zweite Einheit (U2), die elektrisch mit der ersten Einheit (U1) verbunden ist und den elektrischen Kompressor (31) enthält, aufweist, **dadurch gekennzeichnet, dass**
die zweite Einheit (U2) einen Wandler (23) zum Umwandeln von elektrischem Strom, der von dem Stromgenerator (22) erzeugt wird, in Gleichstrom und einen Wechselrichter (24) zum Umwandeln von Gleichstrom von dem Wandler (23) in Wechselstrom aufweist,
wobei der elektrische Kompressor (31) durch die Ausgabe des Wechselrichters (24) angetrieben wird und das Anhängerkühlsystem ausgestaltet ist, um die Drehgeschwindigkeit des Stromgeneratormotors (21) und die Drehgeschwindigkeit des elektrischen Kompressors (31) unabhängig voneinander zu regeln.

2. Anhängerkühlsystem nach Anspruch 1, bei dem die erste Einheit (U1) im unteren Teil des Anhängers vorgesehen ist.

3. Anhängerkühlsystem nach Anspruch 1, bei dem die zweite Einheit (U2) im Deckenteil des Anhängers vorgesehen ist.

4. Anhängerkühlsystem nach Anspruch 2, bei dem die erste Einheit (U1) ein Bedienfeld (29) für das Kühlsystem aufweist.

## Revendications

1. Système de réfrigération pour remorque permettant le refroidissement du compartiment de stockage d'une remorque, le système de réfrigération pour la remorque comprenant un générateur d'électricité (22), un moteur de générateur d'électricité (21) prévu séparément d'un moteur d'entraînement d'un véhicule motorisé et configuré pour entraîner le générateur d'électricité (22), et un compresseur électrique à cycle de réfrigération (31) qui est entraîné par une énergie électrique générée par le générateur d'électricité (22) comme source d'énergie électrique,
dans lequel le système de réfrigération pour la remorque comprend une première unité (U1) contenant le générateur d'électricité (22) et le moteur générateur d'électricité (21) et une deuxième unité (U2) électriquement connectée à la première unité (U1) et contenant le compresseur électrique (31), **caractérisé en ce que**
la deuxième unité (U2) est munie d'un convertisseur (23) destiné à convertir l'énergie électrique générée par le générateur d'électricité (22) en énergie électrique à courant continu et d'un onduleur (24) destiné à convertir l'énergie électrique à courant continu provenant du convertisseur (23) en énergie électrique à courant alternatif,
dans lequel le compresseur électrique (31) est entraîné par la sortie de l'onduleur (24) et le système de réfrigération pour la remorque est configuré pour commander indépendamment la vitesse de rotation du moteur générateur d'électricité (21) et la vitesse de rotation du compresseur électrique (31).

2. Système de réfrigération de remorque de la revendication 1, dans lequel la première unité (U1) est montée dans la partie inférieure de la remorque.

3. Système de réfrigération de remorque de la revendication 1, dans lequel la deuxième unité (U2) est montée dans la partie toit de la remorque.

4. Système de réfrigération de remorque de la revendication 2, dans lequel la première unité (U1) contient un panneau de console (29) pour le système de réfrigération.
